# EUROPÄISCHE PATENTANMELDUNG

(11) **EP 0 623 378 A1**
(43) Veröffentlichungstag der Anmeldung: **09.11.1994**
(21) Anmeldenummer: 93107477.7
(22) Anmeldetag: 07.05.1993
(51) Int. Cl.: B01D 53/00, B01D 53/34, B01D 53/08, B01D 46/34, B01J 8/08, B01J 8/12

(54) **Verfahren zum Reinigen von Abgasen und Vorrichtung zur Durchführung des Verfahrens**

(71) Anmelder: EMMERICHS GmbH, D-82110 Germering (DE); KETTENBAUER GMBH & CO. Verfahrenstechnik, D-79730 Murg (DE)
(72) Erfinder: Emmerichs, Gerhard, D-82110 Germering (DE); Kettenbauer, Franz, D-79730 Murg (DE)
(74) Vertreter: Brauns, Hans-Adolf, Dr. rer. nat.

(57) **Zusammenfassung**

Die Erfindung betrifft ein Verfahren zum Reduzieren der Schadstoffkonzentration aus den Abgasen von Verbrennungsanlagen oder in der Abluft von Recycling- oder Trocknungsanlagen, bei dem die schadstoffhaltigen Gase durch ein trockenes Filterbett geleitet werden und das Filterbett kontinuierlich erneuert wird, **dadurch gekennzeichnet**, daß man die heißen Abgase über einen Verteilerkegel (11) in ein Filterbett (17) leitet, das Filterbett (17) aus Pellets besteht die aufgebaut sind aus
(a) Spezialkalk T, enthaltend Calciumcarbonat und hexagonalen Kohlenstoff und
(b) Rückstandsprodukten aus der Zuckerindustrie, nämlich
   (i) syrupartige Melasse und/oder
   (ii) Carboschlamm aus der Zuckerfertigung;
   die schadstoffbeladenen und mindestens zum Teil zu Staub zerfallenden Pellets unter dem Verteilerkegel ausgetragen werden und die Schütthöhe des Filterbettes entsprechend dem Austrag aufgefüllt wird.

Sie betrifft auch eine Vorrichtung zur Durchführung des Verfahrens.

## Beschreibung

Die Erfindung betrifft ein Verfahren, bei dem Schadstoffemissionen aus Rauchgasen aus Verbrennungsanlagen oder in der Abluft aus Recycling- oder Trocknungsanlagen reduziert werden. Sie betrifft insbesondere ein Verfahren, bei dem man mittels eines speziell ausgebildeten Additivfilters Schadstoffgehalte im Abgas oder in der Abluft reduziert.

Bei Verbrennungsanlagen, bei denen verschiedene Brennstoffe wie Steinkohle, Braunkohle oder Öl verbrannt werden, werden mit den Verbrennungsgasen Schadstoffe an die Umwelt abgegeben. Zusätzliche Schadstoffe treten auf, wenn Müll verbrannt wird, und zwar sowohl Hausmüll als auch Industrieabfälle. Auch in technischen Recyclingsanlagen oder Trocknungsanlagen, z.B. von Klärschlamm, müssen die Schadstoffe aus der Abluft entfernt oder vermindert werden, bevor sie an die Atmosphäre abgegeben werden. Die Schadstoffe sind insbesondere SO₂, NOₓ und Halogene sowie auch schwermetallhaltige Gase, organische Halogenverbindungen und Stäube.

Es bestehen gesetzliche Vorschriften, durch welche die zulässigen Schadstoffemissionswerte festgelegt werden. Dabei werden die tolerierbaren Schadstoffmengen Zug um Zug zurückgenommen. Dies bedingt die Notwendigkeit, die Effizienz der Schadstoffemissionen verhindernden Einrichtungen weiter zu entwickeln und zu verbessern.

Bei bestehenden Kraftwerken, welche fossile Brennstoffe verbrennen, hat man in der Vergangenheit Nachrüstungen vorgenommen, indem man hinter dem Feuerungskessel ein oder mehrere Filter anordnete, durch welche die Rauchgase strömen. Diese Filter dienen sowohl der Zurückhaltung von Flugstäuben als auch der Verminderung der schädlichen Emissionen, insbesondere SO₂ und NOₓ, aber auch von Halogenen.

Diese Filter müssen ständig überwacht und ausgewechselt werden. Die festgehaltenen Schadstoffe müssen schließlich entsorgt werden. Es fallen viele tausend Tonnen Filterstäube an, deren umweltfreundliche Entsorgung problematisch und kostenspielig ist. Diese Filterstäube sind nicht deponierfähig und müssen so nachbehandelt oder eingebunden werden, daß sie auslaugbeständig sind und schließlich in Deponien abgelagert werden können. Dies ist mit erheblichen Kosten und Umweltproblemen verbunden, wobei auch die erheblichen Transportkosten und der Mangel an geeigneten Deponieflächen zu berücksichtigen ist.

In der DE 33 30 834 und in EP 0 338 103 werden Verfahren zum Vermindern der Schadstoffemission beim Betrieb von Verbrennungseinrichtungen, in denen fossile Brennstoffe verbrannt werden, beschrieben. Bei diesen Verfahren gibt man dem Verbrennungsgut ein Additiv zu, das sich aus industriellen Abfallprodukten aufbaut. Das Additiv besteht aus
(a) Spezialkalk T, der als wesentlichen Bestandteil Graphit (ca. 10 %) und CaCO₃ (ca. 82 %) enthält.

Weiterhin enthält das Additiv
(b) Rückstandsprodukte aus der Zuckerindustrie, ausgewählt aus
   (i) syrupartiger Melasse und/oder
   (ii) Festsubstanz aus der Rübenreinigung und/oder
   (iii) Carboschlamm aus der Zuckerfertigung.

Beim Carboschlamm handelt es sich um den bei der Carbonierung gebildeten Schlamm.

Durch dieses Additiv, das dem zu verbrennenden Gut zugesetzt wird, werden schon im Verbrennungsraum die Schadstoffe eingebunden und können dann mit der Schlacke entsorgt werden.

Bei dem bekannten Verfahren ist es auch schon vorgesehen, die vorgenannten Additive nochmals hinter dem Feuerungsraum einer nachgeschalteten Chemiesorptionsstufe zuzusetzen, wobei beim Kontaktieren der heißen Rauchgase eine weitere Einbindung der restlichen Schadstoffe erfolgt.

Es wurde nun gefunden, daß das vorerwähnte Additiv in spezieller Aufarbeitung und in einem speziell ausgebildeten Filter eingesetzt, äußerst wirksam Schadstoffe aus Abgasen und Abluft vermindert, unabhängig davon, ob schon in einer vorgeschalteten Stufe, z.B. im Verbrennungsraum von Feuerungsanlagen, eine Schadstoffreduzierung erfolgt ist.

Aufgabe der Erfindung ist es somit, ein Verfahren zur Reduzierung der Schadstoffkonzentration in Rauchgasen aus Verbrennungsanlagen oder zur Schadstoffreduzierung in der Abluft aus Recycling- oder Trocknungsanlagen zur Verfügung zu stellen, bei dem die in den Abgasen enthaltenen Schadstoffe (Stäube, SO₂, NOₓ, Halogene etc.) wirksam von Schadstoffen gereinigt werden und die mit den Schadstoffen beladenen Filteradditive anschließend in einfacher Weise umweltfreundlich entsorgt werden können. Verbunden mit dieser Aufgabe ist es, ein für dieses Verfahren geeignetes Additivfilter zur Verfügung zu stellen.

Die Erfindung betrifft ein Verfahren zum Reduzieren der Schadstoffkonzentration aus den Abgasen von Verbrennungsanlagen oder in der Abluft von Recycling- oder Trocknungsanlagen, bei dem die schadstoffhaltigen Gase durch ein trockenes Filterbett geleitet werden und das Filterbett kontinuierlich erneuert wird, dadurch gekennzeichnet, daß man die heißen Abgase über einen Verteilerkegel in ein Filterbett leitet, das Filterbett aus Pellets besteht die aufgebaut sind aus
(a) Spezialkalk T, enthaltend Calciumcarbonat und hexagonalen Kohlenstoff und
(b) Rückstandsprodukten aus der Zuckerindustrie, nämlich
   (i) syrupartige Melasse und/oder
   (ii) Carboschlamm aus der Zuckerfertigung;
die schadstoffbeladenen und mindestens zum Teil zu Staub zerfallenden Pellets unter dem Verteilerkegel ausgetragen werden und die Schütthöhe des Filterbettes entsprechend dem Austrag aufgefüllt wird.

Das in dem Additivfilter verwendete Additiv baut sich auf aus
(a) Spezialkalk T, enthaltend Calciumcarbonat und hexagonalen Kohlenstoff und
(b) Rückstandsprodukten aus der Zuckerindustrie, nämlich
   (i) syrupartige Melasse und/oder
   (ii) Carboschlamm aus der Zuckerfertigung.

Die Komponente (ii) enthält bis zu ca. 80 Gew.-% schadstoffbindende Kalkanteile. Das Verhältnis der Komponente (a) zur Komponente (b) kann 30 bis 70 bis 70 zu 30 betragen.

Die Komponenten (a) und (b) werden in Form von Pellets auf dem Filter eingesetzt. Die Pellets werden aus den Ausgangsprodukten gewonnen. Sie können auf einfachen Pelletiermaschinen zu Strängen mit gleichmäßigem Querschnitt verarbeitet werden und auf die gewünschte Länge geschnitten werden. Die Pellets haben eine Größe zwischen 10 und etwa 20 mm und einen Durchmesser zwischen etwa 6 und 9 mm. Vorzugsweise beträgt die Länge etwa 15 mm und der Durchmesser 8 mm. Das Schüttgewicht der Pellets beträgt ca. 300 kg/m³.

Die Abgase aus Verbrennungsanlagen und/oder die Abluft aus Recylings- und Trocknungsanlagen haben höhere Temperaturen. Diese Temperaturen liegen bei Verbrennungsanlagen im allgemeinen oberhalb 250 bis etwa 650°C und bei Trocknungsanlagen oberhalb 100°C.

Die Reinigung auf dem bei der vorliegenden Erfindung verwendeten Filterbett (Additivfilter) ist eine Trockensorption. Bei dieser werden SO₂, NOₓ sowie auch halogenhaltige Verbindungen wie HCl und HF oder chlorhaltige organische Verbindungen von dem Filteradditiv festgehalten und ebenfalls Stäube.

Die Schütthöhe des Filterbetts ergibt sich aus der Gasgeschwindigkeit und der gewünschten Verweilzeit, wobei eine Verweilzeit von 2 bis 15 Sekunden, vorzugsweise 3 bis 7 Sekunden, bevorzugt ist.

Die Pellets, die mit den Schadstoffen beladen werden, zerfallen zum Teil zu Staub und werden ausgetragen. Das Niveau des Filterbettes (Schütthöhe) wird in Abhängigkeit von dem Austrag automatisch nachgefüllt.

Im Filter oder in der nachfolgenden Rohrleitung erfolgt eine Messung der Emission und in Abhängigkeit davon wird, sobald ein vorher definierter Grenzwert erreicht wird, das komplette Filtermaterial ausgetauscht.

Die ausgetragenen schadstoffbeladenen Pellets bzw. Stäube werden der Verbrennung zugeführt. Handelt es sich um die Reinigung der Abgase von Feuerungsanlagen, so können diese beladenen Pellets und Stäube direkt der Verbrennung zugeführt werden. Anderenfalls werden sie in anderen Feuerungsanlagen verbrannt. Durch die Zusammensetzung des Additivs ist gewährleistet, daß die Schadstoffe in der Asche verbleiben und nicht wieder bei der Verbrennung freigesetzt werden. Das Additiv selbst hat einen geringen Heizwert, welcher die Verbrennung unterstützt. Die entstehende Asche oder Schlacke kann eingeschmolzen bzw. verglast werden.

Sind in den Verbrennungsanlagen bereits im Feuerungsraum die Additive gemäß (a) und (b), gegebenenfalls auch zusammen mit Festsubstanzen aus der Rübenreinigung, verwendet worden, so findet beim Rückführen der kontaminierten Filterpellets bzw. Stäube direkt eine feste Einbindung der Schadstoffe statt, so daß die anfallende Asche bzw. Schlacke bereits deponierfähig ist.

Die Vorrichtung zur Durchführung des erfindungsgemäßen Verfahrens weist einen speziellen Verteilerkegel auf, der es ermöglicht, daß die im schadstoffbelasteten Gas auftretende Staub- und Schmutzpartikel durch Verwirbelung und unter Einfluß der Schwerkraft an der Innenwandung eines unteren Hohlkegels abrutschen und über eine an der tiefsten Stelle angebrachten Öffnung mit den daran vorbeilaufenden zu Staub zerfallenden Peletts zu einer Austragungsschleuse bringbar sind.

Vorteilhafterweise ist der Verteilerkegel so gestaltet, daß das Gas durch Öffnungen in einem oberen Hohlkegel des Verteilerkegels gleichmäßig auf den gesamten Querschnitt senkrecht zur Symmetrieachse des Filtergehäuses verteilt wird und dadurch das Filtermaterial, hier die Peletts, gleichmäßig belastet wird.

Durch geneigte Abschirmbleche oberhalb der im Verteilerkegel angebrachten Öffnungen wird ein Abrutschen des Filtermaterials nach unten zu der Austragungsschleuse hin ermöglicht und gleichzeitig das Eindringen von Filtermaterial in den Hohlkegel vermieden.

Besonders vorteilhaft ist es, die Öffnungen entsprechend der Geschwindigkeit des schadstoffbelasteten Gases unterschiedlich groß zu wählen, so daß bei möglichst starker Verwirbelung eine gleichmäßige Verteilung des Gases im Filtergehäuse erreicht wird.

Des weiteren wird es bevorzugt, die Spitzenwinkel des oberen und unteren Hohlkegels des Verteilerkegels unterschiedlich auszubilden, so daß je nach Filtergehäusegröße eine gleichmäßige Verteilung des schadstoffbelasteten Gases im Filtermaterial ermöglicht wird und gleichzeitig der Spitzenwinkel des unteren Hohlkegels des Verteilerkegels so gewählt ist, daß der sich durch diesen unteren Hohlkegel und dem unteren Teil des Filtergehäuses gebildete Zwischenraum sich nach unten hin zunehmend erweitert. Dadurch wird erreicht, daß das verbrauchte Filtermaterial den Zwischenraum nicht verstopft.

Besonders vorteilhaft ist eine Zuleitung des schadstoffbelasteten Gases durch eine im Querschnitt dreiecksförmige Rohgaszuleitung, die es ermöglicht, daß sich auf der Oberseite der Rohgasleitung kein Filtermaterial ansammeln kann.

Es wird bevorzugt den Verteilerkegel aus Edelstahl herzustellen, da hierdurch bester Korrosionsschutz gegen die heißen, schadstoffbelasteten Gase gewährleistet ist. Ebenso wird es bevorzugt, die verschiedenen Teile des Filtergehäuses aus Edelstahl herzustellen.

Es sind jedoch auch weitere korrosions- und hitzebeständige Materialien zur Herstellung des Verteilerkegels bzw. des Filtergehäuses, wie z.B. für das Verteilergehäuse Keramik, denkbar.

Im folgenden ist zur weiteren Erläuterung und zum besseren Verständnis der Erfindung ein Ausführungsbeispiel einer nach dem erfindungsgemäßen Verfahren arbeitenden Vorrichtung unter Bezugnahme auf die beigefügten Zeichnungen näher beschrieben und erläutert. Es zeigt:

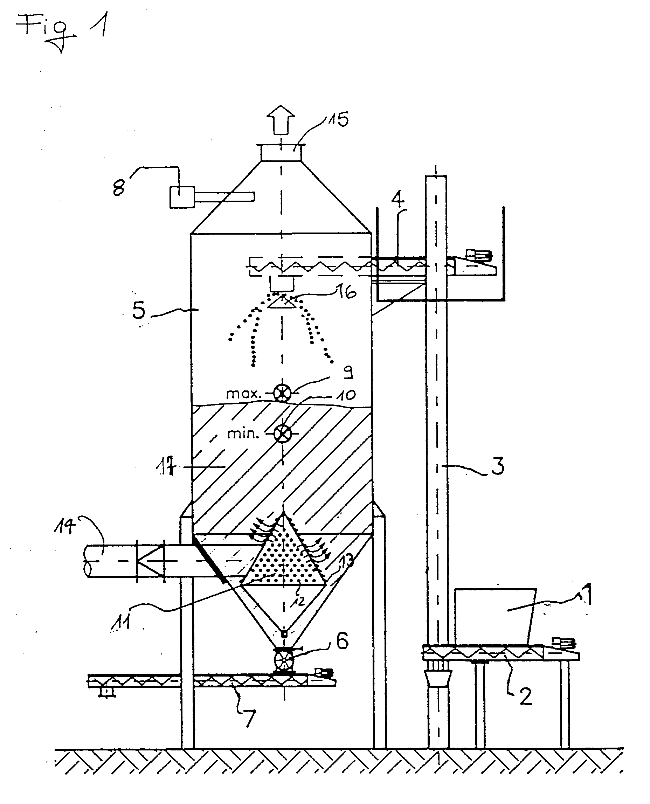

- Fig. 1: eine schematische Darstellung der erfindungsgemäßen Vorrichtung, und

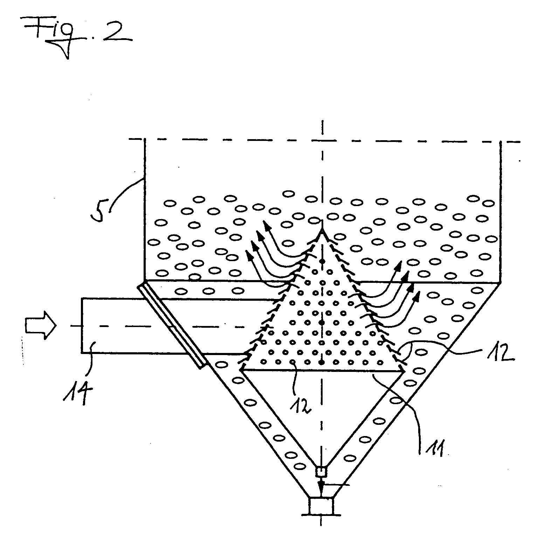

- Fig. 2: eine vergrößerte Darstellung des unteren Teiles der erfindungsgemäßen Vorrichtung mit einem speziellen Verteilerkegel.

Ein auf Füßen stehendes Filtergehäuse 5 besteht aus einem kegelförmigen, rotationssymmetrischen Unterteil, an dem an der in der Einbaulage tiefsten Stelle eine Austragungsschleuse 6 angebracht ist. Auf der oberen Seite des kegelförmigen Unterteils ist ein zylindrisches Mittelteil angeordnet. Auf diesem zylindrischen Mittelteil des Filtergehäuses 5 ist ein kegelförmiges Oberteil befestigt, an dessen
Oberseite ein Stutzen 15 angebracht ist.

Im unteren Teil des Filtergehäuses 5 ist ein Verteilerkegel 11 angeordnet. Der Verteilerkegel 11 besteht aus zwei Hohlkegeln, die an ihren gleichgroßen, einander zugewandten Grundflächen miteinander verbunden sind. Der Verteilerkegel 11 ist auf der Rotationsachse des Filtergehäuses 5 so angeordnet, daß zwischen unterem Hohlkegel des Verteilerkegels 11 und dem unteren Teil des Filtergehäuses 5 ein Zwischenraum entsteht. Der obere Hohlkegel des Verteilerkegels 11 besitzt über den gesamten Umfang Öffnungen 12, die durch Abweisbleche 13 abgedeckt sind. Die Abweisbleche 13 liegen auf horizontalen Mantellinien des oberen kegelförmigen Teiles des Verteilerkegels 11 und sind jeweils gegenüber einer Horizontalebene nach unten hin geneigt.

Dieser Verteilerkegel 11 ist an eine Rohgas-Leitung 14 angeschlossen, die einen etwa dreieckigen Querschnitt aufweist. Dabei liegt eine Fläche in einer horizontalen Ebene, so daß das Filtermaterial, hier die Peletts auch im Bereich der Rohgas-Leitung 14 von oben nach unten an den Flanken der Rohgas-Leitung 14 absinken kann.

Im Filtergehäuse 5 sind Füllstand-Meßeinrichtungen 9 und 10 angebracht, die den jeweiligen Füllstand des Filtermaterials messen. Im oberen Teil des Filtergehäuses 5 ist auf der Symmetrieachse eine Verteilereinrichtung 16 angeordnet, die aus einem Konus mit unterschiedlichen Drall- und Verteilblechen besteht. Über dieser Verteileinrichtung 16 liegt eine Eintragungsschnecke 4, die das von einem Elevator 3 angelieferte Filtermaterial einfördert. Dieser Elevator 3 ist außerhalb des Filtergehäuses 5 angeordnet und hat an seinem unteren Ende eine Dosierschnecke 2, die von einem Vorratsbehälter 1 angeliefertes Filtermaterial 17 zum Elevator 3 fördert.

Im oberen kegelförmigen Teil des Filtergehäuses 5 ist eine Schadstoffrückstand-Meßeinrichtung 8 angeordnet.

Das aus der Verbrennungsanlage oder in der Abluft von Recycling- oder Trocknungsanlagen kommende schadstoffhaltige Gas wird über die Rohgasleitung 14 in den Verteilerkegel 11 eingeleitet und von diesem über die Öffnungen 12 in das Filtermaterial 17 eingespeist. Das schadstoffhaltige Gas durchströmt dann das Filtermaterial 17 nach oben, passiert die Schadstoffrückstands-Meßeinrichtung 8 und tritt durch den Stutzen 15 als Reingas aus.

Bei der Verwirbelung des schadstoffhaltigen Gases in dem Verteilerkegel 11 werden darin vorhandene Staub- und Schmutzpartikel an die Wandung des Verteilerkegels 11 geworfen und rutschen durch die Schwerkraft an dem unteren kegelförmigen Teil des Verteilerkegels 11 durch eine an der tiefsten Stelle angebrachten Öffnung hindurch.

Das Filtermaterial rutscht nach unten an den Abweisblechen 13 des Verteilerkegels 11 herunter. Weiter wird das verbrauchte Filtermaterial 17, die zu Staub zerfallenen Peletts, durch den vom unteren, kegelförmigen Unterteil des Filtergehäuses 5 und dem unteren Hohlkegel des Verteilerkegels 11 gebildeten Zwischenraum zur Austragungsschleuse 6 gefördert. Dabei ist der Zwischenraum so ausgebildet, daß er sich zur Austragungsschleuse 6 hin zunehmend erweitert.

Zeigt die Schadstoffrückstand-Meßeinrichtung 8 an, daß zuviel auszufilternde Bestandteile im Reingas enthalten sind, werden verbrauchtes Filtermaterial 17 und eventuell durch die Öffnung an der tiefsten Stelle des Verteilerkegels 11 hindurchfallende Staub- und Schmutzpartikel über die Austragungsschleuse 6 und eine Austragungsschnecke 7 ausgetragen. Diese Materialien können nun in eine Verbrennungsanlage zurückgeführt werden.

Dadurch sinkt der Filtermaterialspiegel innerhalb des Filtergehäuses 5. Erreicht der Filtermaterialspiegel die Füllstand-Meßeinrichtung 10, erhält die Dosierschnecke 2 und die Einzugsschnecke 4 ein Signal, wodurch aus dem Vorratsbehälter 1 frisches Filtermaterial 17 entnommen und über die Dosierschnecke 2, den Elevator 3 und die Einzugsschnecke 4 in das Filtergehäuse 5 eingespeist wird, bis der maximale Füllstand wieder erreicht ist. Das neue Filtermaterial 17 wird beim Einfüllvorgang über die Verteileinrichtung gleichmäßig im zylindrischen Teil des Filtergehäuses 5 verteilt. Dieser Vorgang läuft solange, bis der maximale Füllstand von der Füllstand-Meßeinrichtung 9 angezeigt wird.

Enthält das Rohgas relativ viel auszufilternde Bestandteile, so wird - gesteuert durch die Schadstoffrückstand-Meßeinrichtung 8 - in einem kontinuierlichen Vorgang verbrauchtes Filtermaterial 17 über die Austragungsschleuse 6 abgezogen und neues Filtermaterial 17 in der eben beschriebenen Weise von oben in das Filtergehäuse 5 eingespeist. Enthält das Rohgas dagegen weniger auszufilternde Bestandteile, läuft dieser Vorgang langsamer ab.

Bei der praktischen Durchführung des Verfahrens werden die schadstoffhaltigen Gase aus dem Verbrennungsraum oder die schadstoffhaltige Luft aus einer Trockeneinrichtung gleichmäßig über den Verteilerkegel im Filterbett verteilt. Dabei beträgt die Austrittsgeschwindigkeit aus den Öffnungen im oberen Hohlkegel des Verteilerkegels 10 bis 30 m/sec. Die Gasführung vom außenliegenden Rundflansch zum im Inneren des Filters liegenden Verteilerkegel erfolgt über einen dreieckförmigen Kanal, um Staubablagerungen zu vermeiden. Die Gasgeschwindigkeit in der Rohgaszuleitung liegt bei 10 bis 18 m/sec. Der Querschnitt des zylindrischen Mittelteils wird so gewählt, daß eine Gasgeschwindigkeit von 0,3 bis 0,8 m/sec im freien Querschnitt erreicht wird.

Das erfindungsgemäße Verfahren liefert eine Reihe von technischen Vorteilen. Bei Verbrennungsanlagen, bei denen schon im Feuerungsraum durch geeignete Additive eine Einbindung der Schadstoffe in die Schlacke erfolgt und damit eine erhebliche Verringerung der Schadstoffe im Abgas erzielt wird, kann durch die Verwendung des erfindungsgemäßen Filters eine weitere Reduzierung der Schadstoffemission bewirkt werden. Bei Anlagen, bei denen noch keine Verringerung der Schadstoffe im Feuerungsraum erfolgt, können die Schadstoffe wirkungsvoll durch die Verwendung des erfindungsgemäßen Filters reduziert werden. In jedem Fall können die anfallenden kontaminierten Filterstäube einfach entsorgt werden, indem man sie in eine Verbrennungsanlage zurückführt oder dort einführt. Eine besondere Behandlung der Filterstäube, um sie deponierfähig zu machen, entfällt dadurch.

## Patentansprüche

1. Verfahren zum Reduzieren der Schadstoffkonzentration aus den Abgasen von Verbrennungsanlagen oder in der Abluft von Recycling- oder Trocknungsanlagen, bei dem die schadstoffhaltigen Gase durch ein trockenes Filterbett geleitet werden und das Filterbett kontinuierlich erneuert wird, **dadurch gekennzeichnet**, daß man die heißen Abgase über einen Verteilerkegel (11) in ein Filterbett (17) leitet, das Filterbett (17) aus Pellets besteht die aufgebaut sind aus
(a) Spezialkalk T, enthaltend Calciumcarbonat und hexagonalen Kohlenstoff und
(b) Rückstandsprodukten aus der Zuckerindustrie, nämlich
(i) syrupartige Melasse und/oder
(ii) Carboschlamm aus der Zuckerfertigung;
die schadstoffbeladenen und mindestens zum Teil zu Staub zerfallenden Pellets unter dem Verteilerkegel (11) ausgetragen werden und die Schütthöhe des Filterbettes (17) entsprechend dem Austrag aufgefüllt wird.

2. Verfahren nach Anspruch 1, dadurch gekennzeichnet, daß man die ausgetragenen Pellets und/oder Stäube in einer Verbrennungsanlage verbrennt.

3. Verfahren nach einem der vorhergehenden Ansprüche, dadurch gekennzeichnet, daß man im Filterbett (17) eine Verweilzeit von 2 bis 15 Sekunden einstellt.

4. Verfahren nach einem der vorhergehenden Ansprüche, dadurch gekennzeichnet, daß man Pellets mit einer Größe zwischen 10 und 20 mm und einem Durchmesser zwischen 6 und 9 mm einsetzt.

5. Vorrichtung zur Durchführung des Verfahrens nach Anspruch 1 mit
- einem Filtergehäuse (5) zur Aufnahme der Pellets bestehend aus einem kegelförmigen, in Einbaulage nach unten hin zusammenlaufenden Unterteil, das an der unteren Seite eine Öffnung aufweist,
- einem zylindrischen Mittelteil, das auf dem Unterteil angeordnet ist,
- einem kegelförmigen, in Einbaulage nach oben hin zusammenlaufenden Oberteil, das auf der Oberseite eine Öffnung (15) zur Entnahme des gereinigten Gases aufweist und auf dem zylindrischen Mittelteil befestigt ist,
- einem im Filtergehäuse (5) angeordneten Verteilerkegel (11), der über eine Rohgaszuleitung (14) mit schadstoffhaltigem Gas beschickt wird,
- einer Eintragungseinrichtung (4) zum Eintragen der Peletts in das Filtergehäuse (5),
- einer Verteiler-Einrichtung (16) zum gleichmäßigen Verteilen der Peletts im Filtergehäuse (5),
- eine Füllstands-Meßeinrichtung (9, 10) zum Messen der Füllstandshöhe der Peletts im Filtergehäuse (5),
- einer Schadstoffrückstands-Meßeinrichtung (8) zum Messen der Schadstoffrückstände im gereinigten Gas, und
- einer Austragungseinrichtung (6, 7) zum Austragen der zu Staub zerfallenen Peletts und eventuell anfallender Staubpartikel aus dem Verteilerkegel (11).

6. Vorrichtung nach Anspruch 5
dadurch gekennzeichnet, daß
- der Verteilerkegel (11) aus einem oberen und unteren Hohlkegel besteht, die an ihren gleichgroßen, einanderzugewandten Grundflächen miteinander verbunden sind,
- der obere Hohlkegel mit einer Anzahl Öffnungen (12) versehen ist, die von einer Anzahl jeweils auf der Manteloberfläche des Kegels (11) umlaufender, gegenüber einer Horizontalebene nach unten geneigter Abweisbleche (13) abgedeckt sind, um das Eindringen der Pellets in das Innere des Kegels zu verhindern, und
- der untere Hohlkegel, an der in Einbaulage tiefsten Stelle mit einer Öffnung versehen ist.

7. Vorrichtung nach Anspruch 6
dadurch gekennzeichnet, daß
die jeweiligen Spitzenwinkel des oberen und unteren Hohlkegels verschieden sind.

8. Vorrichtung nach Anspruch 6
dadurch gekennzeichnet, daß
die Durchmesser der Öffnungen (12) verschieden sind.
